# FASCICULE DE BREVET EUROPEEN

(11) **EP 1 191 982 B1**
(45) Date de publication et mention de la délivrance du brevet: **02.06.2004**
(21) Numéro de dépôt: 00938347.2
(22) Date de dépôt: 16.06.2000
(51) Int. Cl.: A63B 47/02, A01G 1/12

(54) **DISPOSITIF AUTOMATIQUE DE RAMASSAGE D'OBJETS**
AUTOMATISCHE VORRICHTUNG ZUM SAMMELN VON GEGENSTÄNDEN
DEVICE FOR AUTOMATICALLY PICKING UP OBJECTS

(30) Priorité: 17.06.1999 BE 9900422
(43) Date de publication de la demande: 03.04.2002
(73) Titulaire: Solar & Robotics S.A., 1050 Bruxelles (BE)
(72) Inventeur: COLENS, André, B-1330 Rixensart (BE)
(74) Mandataire: Colens, Alain
(86) Numéro de dépôt international: PCT/BE2000/000064
(87) Numéro de publication internationale: WO 2000/078410

(56) Documents cités:
- DE-A- 3 918 867
- DE-A- 19 711 298
- US-A- 5 980 392
- PATENT ABSTRACTS OF JAPAN vol. 1997, no. 02, 28 février 1997 (1997-02-28) -& JP 08 276037 A (HIYAMUTA SHOTA), 22 octobre 1996 (1996-10-22)
- PATENT ABSTRACTS OF JAPAN vol. 016, no. 461 (C-0988), 25 septembre 1992 (1992-09-25) -& JP 04 164464 A (TAKESHI NAKAGAWA), 10 juin 1992 (1992-06-10)

## Description

La plupart des clubs de golf possèdent un "practice", espace de gazon sur lequel les golfeurs peuvent s'entraîner.

Les golfeurs exercent leurs "drives" à partir d'un espace réservé et envoient les balles à des distances généralement comprises entre 50 et 200 mètres. Ces balles doivent être régulièrement ramassées et ramenées à l'espace de tir.

On connaît déjà des engins spécialement adaptés pour le ramassage des balles de golf, en particulier sur des practices. Ils font en général intervenir un système comportant des disques souples espacés de la largeur d'une balle de golf (voir par exemple brevet des Etats-Unis 5.711.388). Les disques tournent et sont montés verticalement sur un axe horizontal perpendiculaire à la progression de l'engin, ce dernier étant tiré par un véhicule automoteur ou poussé à la main.

Le document japonais JP-827 6037 décrit un engin automatique à trajectoire déterminée par un rail électromagnétique pour la récolte de balles de golf. Ce système est compliqué à implémenter et n'est pas entièrement satisfaisant. La trajectoire suivie est en effet toujours la même.

Si l'on ne veut pas avoir un nombre de balles prohibitif en circulation, le ramassage doit se faire régulièrement, ce qui entraîne un coût en main d'oeuvre important et une perturbation régulière des joueurs.

Il y a donc un réel besoin de disposer d'un système de ramassage de balles qui soit entièrement automatique et puisse fonctionner sans interrompre les joueurs et sans risque d'accidents dus aux tirs de balle.

La présente invention concerne un système de ramassage et de retour des balles entièrement automatique, éliminant la main d'oeuvre et permettant aux joueurs de continuer à s'exercer durant le ramassage.

L'invention propose un système de ramassage d'objets tel que défini à la revendication 1 annexée et un engin y adapté tel que défini dans la revendication 13.

Plus précisément, l'invention propose un système de ramassage d'objets sur une surface déterminée constitué par un engin mobile automatique muni d'un moteur et d'une source d'énergie, par exemple une batterie rechargeable, et muni d'un ordinateur de bord. L'engin porte un dispositif mécanique de préhension et de stockage des objets dans un réceptacle, un dispositif de vidage dudit réceptacle, un dispositif de détection des limites de la surface de ramassage. Le système comporte aussi au moins une station de recharge des batteries rechargeables et une station de décharge des objets récoltés.

Selon l'invention, le système comprend un engin mobile autonome circulant de manière aléatoire ou pseudo aléatoire sur la surface ou les balles doivent être récoltées.

De manière connue, la surface est de préférence délimitée par un fil périphérique dans lequel circule un signal basse fréquence détecté par l'engin. D'autres systèmes de délimitation de la surface de travail peuvent être adoptées, y compris par obstacle physique, tels que décrits dans la demande PCT/BE91/00068 pour une tondeuse à gazon robotique.

L'engin de ramassage comportera un châssis et des éléments d'avancement et de guidage connus en soi, par exemple similaires à ceux décrits dans les demandes PCT/BE91/00068 et PCT/BE98/00038.

Le système de tonte des documents susmentionnés est remplacé par un système de ramassage de balles. Le système de ramassage de balles est constitué, par exemple, d'un rouleau formé d'une série-de disques flexibles parallèles, de profil approprié, espacés d'une distance égale ou légèrement inférieure au diamètre d'une balle. Lors de l'avancement de la machine, le système de disques flexibles reposant sur le sol est entraîné passivement en rotation, et roule sur les balles se trouvant sur son passage. Le rouleau coïnce ces dernières entre deux disques flexibles adjacents qui par le mouvement circulaire ascendant, et l'effet d'éléments de déviation dans la partie descendante, les ramènent dans un panier collecteur supporté par l'engin. Le système de disques flexibles est de préférence monté sur une ou des articulations, ou est en tout cas monté de manière souple, permettant de garder le contact avec le sol en cas d'irrégularités de celui-ci. Le panier collecteur comprend à sa partie inférieure une ouverture commandée par l'ordinateur de bord.

Selon un mode de réalisation, le système de disques flexibles comprend un axe articulé apte à se relever, par exemple à l'intervention d'un vérin. Lors d'un changement de direction, l'ordinateur commande le relèvement du système à disques souples afin d'éviter une friction importante avec le sol, et les dégradations de la surface d'herbe et la consommation énergétique supplémentaire qui peuvent en résulter.

Lorsque le panier est plein ou lorsque la machine doit recharger ses batteries, l'ordinateur commandant l'avancement de l'engin applique un algorithme de retour vers un point fixe (station). Le niveau limite de remplissage en balles dans le panier collecteur peut par exemple être détecté par un système d'émetteur-récepteur IR connecté au micro-ordinateur.

Pour le retour à la station de recharge, selon un mode de réalisation, l'engin recherche le fil périphérique en suivant de manière aléatoire par exemple une trajectoire droite puis, ayant détecté ce dernier, le suit à une distance fixe jusqu'à atteindre la borne ou station de recharge. Cette dernière peut être avantageusement couplée et intégrée à la station de récupération des balles.

En effet selon un mode préféré de réalisation, après détection de la borne, p.e. par contact, la machine s'arrête, et se positionne éventuellement de manière plus précise. L'ordinateur commande l'ouverture de la trappe permettant au panier de se vider et maintient la machine en état de recharge jusqu'à ce que ses batteries soient complètement rechargées. Après recharge, l'engin repart pour un nouveau cycle de récolte en parcourant la surface du practice de manière aléatoire ou quasi aléatoire.

Selon d'autres modes de réalisation, actuellement moins préférés, l'engin peut rejoindre la station de recharge par d'autres moyens, par exemple par analyse d'un champ magnétique avec recharge éventuelle par induction (voir par exemple US 5.869.910), par guidage radio ou encore par détection de signaux infra-rouge.

Dans ce dernier cas, l'engin selon l'invention incorpore un système de guidage et de positionnement par rapport à une station fixe faisant par exemple intervenir au moins un faisceau infrarouge directionnel émis par la station fixe, le robot mobile étant muni d'un système de détection (détecteurs) directionnel d'émission infra-rouge relié au microordinateur incorporé dans ledit robot, le robot se déplacant sur une surface de travail de manière essentiellement aléatoire, le micro-ordinateur comprenant un algorithme apte à commander le retour à la station fixe par déplacement du robot vers la direction d'émission dudit faisceau infrarouge. Le faisceau infrarouge peut être un faisceau directionnel étroit et le système de détection peut être avantageusement situé sur le châssis au centre de rotation du robot , dirigés dans le sens du mouvement du robot, le positionnement précis dans la station fixe étant effectué par rotation de l'engin autour d'un axe vertical selon un algorithme basé sur la détection du faisceau étroit, par exemple de 2 à 15°.

Ce système peut faire intervenir au moins deux faisceaux de directionalité substantiellement différente émis à partir ou aux environs de la station fixe, le ou les faisceaux les moins directionnels servant à l'approche vers la station fixe , tandis que le ou les faisceaux-plus directionnels sont utilisés pour l'étape ultime de positionnement précis du robot par rapport à cette station fixe.

L'engin selon l'invention peut fonctionner pendant les tirs de balles. Le profil de l'engin est bas et est peu important par rapport aux engins classiques tirés et la probabilité de collision avec une balle en est diminuée. De plus l'habillage de l'engin, par exemple en matière plastique éventuellement recouverte de mousse, est conçu de manière à pouvoir supporter sans endommagement l'impact de balles de golf.

On peut à certains moments souhaiter que la surface soit entièrement débarassée de balles, par exemple pour tondre le gazon de manière classique. Dans ce cas la récupération en utilisant un système de trajectoire aléatoire ou quasi aléatoire n'est plus souhaitable. Un système de trajectoire systématique peut être adopté pour recouvrir l'ensemble du terrain en un temps optimal.

Par exemple, la machine peut suivre le fil périphérique à une certaine distance de celui-ci. Grâce à la mesure constante du champ d'un fil périphérique de délimitation de la surface de travail tel que décrit dans les brevets EP 0550 473 B1 et 0 744 093 B1, la machine calcule constamment sa distance par rapport au fil et peut incrémenter celle-ci après chaque tour. La récupération se déroulera en bandes parallèles à partir de la périphérie.

Plus précisément, selon cette dernière technique, au début la machine est positionnée le long du fil périphérique. Après le démarrage, l'ordinateur de bord mesure périodiquement, de manière connue, l'amplitude du signal émis par le fil périphérique. Cette mesure permet à l'ordinateur de bord de connaître-la distance le séparant du fil et donc de contrôler la direction de la machine de manière à la garder à une distance fixe du fil.

Si la longueur du fil a été préalablement introduite dans la mémoire de l'ordinateur de bord, celui-ci peut déterminer avec une précision raisonnable le moment ou un tour complet a été effectué par la tondeuse le long de ce fil. La tondeuse peut alors s'éloigner du fil d'une distance égale à la largeur de coupe de manière à pouvoir effectuer une nouvelle boucle à une distance du fil augmentée de la largeur de coupe. L'opération peut ainsi se répéter en augmentant chaque fois la distance entre la tondeuse et le fil périphérique, idéalement jusqu'à arriver au centre de la zone à tondre.

Selon une variante de réalisation, il n'est pas nécessaire d'introduire dans l'ordinateur la longueur du fil susmentionné. La longueur peut en effet être déterminée par l'ordinateur de bord en intégrant les différences de vitesse entre les roues motrices de la machine (changements de direction) , jusqu'à ce que le changement cumulé atteigne ou dépasse 360 °. Dans ce but, le système peut également avantageusement intégrer un compas magnétique ou inertiel.

L'invention sera davantage décrite en se référant à l'exemple de réalisation qui suit se référant aux dessins en annexe présentés à titre d'exemples non limitatifs.

La fig. 1 est une vue du dessous de l'engin selon l'invention.

La fig. 2 est une vue latérale en coupe de l'engin selon la fig. 1.

La fig. 3 illustre le trajet suivi par l'engin

La fig. 4 illustre un exemple de station de recharge électrique et de décharge des balles de golf.

La fig. 5 illustre en détail un système de recharge.

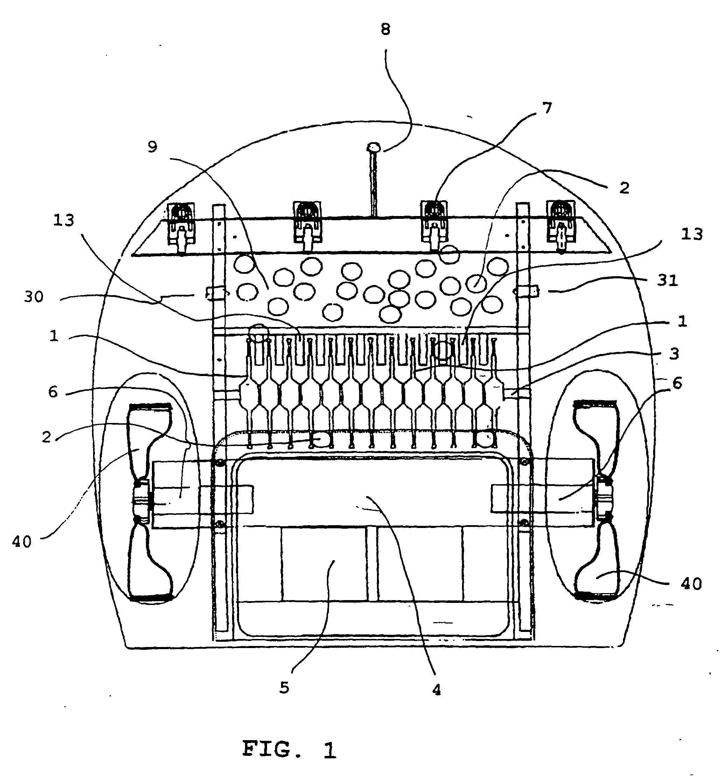

La fig. 1 est une vue du dessous de l'engin selon l'invention. On illustre les disques flexibles 1, les balles 2 venant se coincer entre les disques , l'axe transversal de rotation 3 des disques, axe de préférence relié au châssis de manière non rigide, le boîtier comprenant l'électronique de commande et l'ordinateur de bord 4, les batteries 5, les moteurs de roue 6, les roulettes folles 7 montées à l'avant, le détecteur de fil périphérique 8, le détecteur optique de remplissage de panier 30,31 constitué d'un émetteur et d'un récepteur infrarouge.

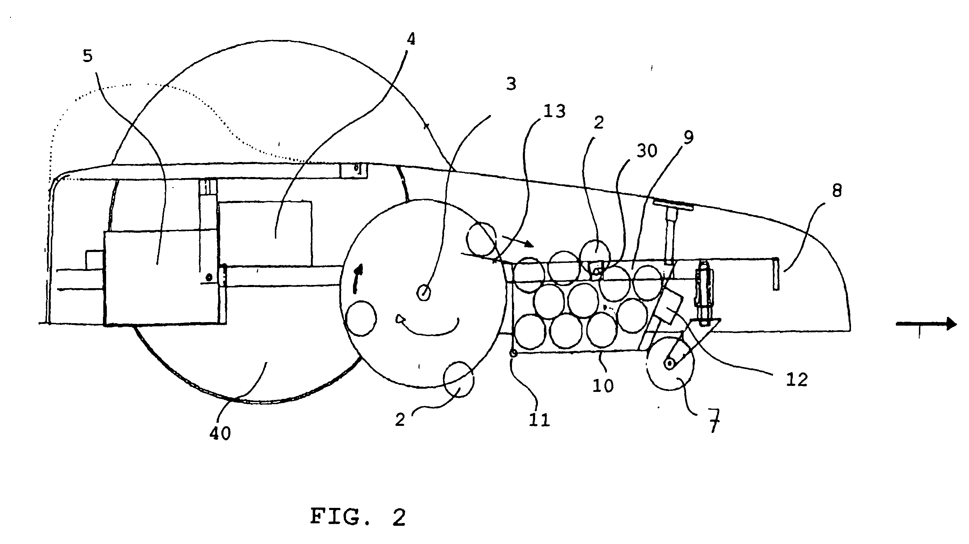

La fig. 2 représente l'engin de la fig. 1 vue en coupe de profil. On distingue le panier 9 récepteur de balles, muni à sa paroi inférieure d'une ouverture pivotante autour de l'axe 11 et dont l'ouverture est commandée par le vérin 12. Les doigts 13 situés sur la trajectoire circulaire des balles coincées extraient ces balles hors des disques de manière à les faire tomber dans le panier 9.

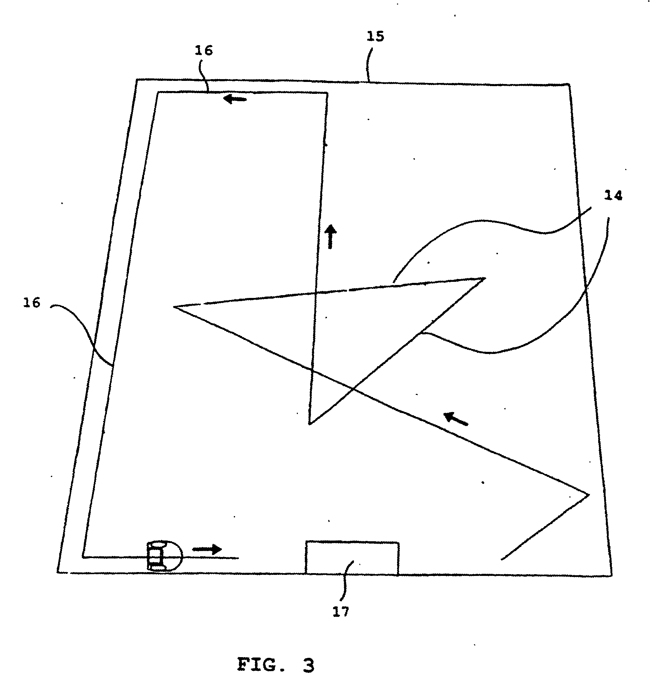

La fig. 3 montre un exemple de trajet (14) de l'engin celui-ci est typiquement aléatoire. Lorsqu'elle a fait le plein de balles, et/ou lorsque la batterie est suffisamment déchargée, l'engin recherche le fil périphérique 15 qu'elle suit (en 16) jusqu'à détecter la station 17.

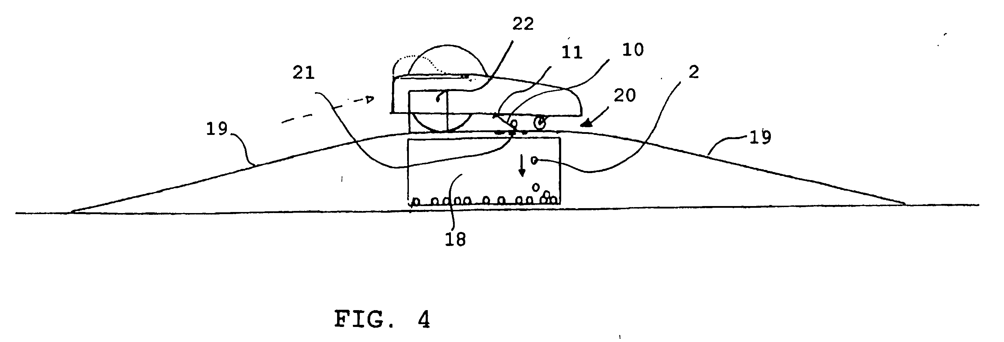

La fig. 4 illustre un mode de réalisation dans lequel la station est surélevée de manière à pouvoir introduire un container 18 destiné à recueillir les balles. Les rampes 19 permettent à la machine d'atteindre la plate-forme 20 où est située la station de recharge. La plate-forme 20 est munie d'une grille 21 par où les balles libérées par l'ouverture du panier 9 peuvent rejoindre le container ou le conduit de retour des balles.

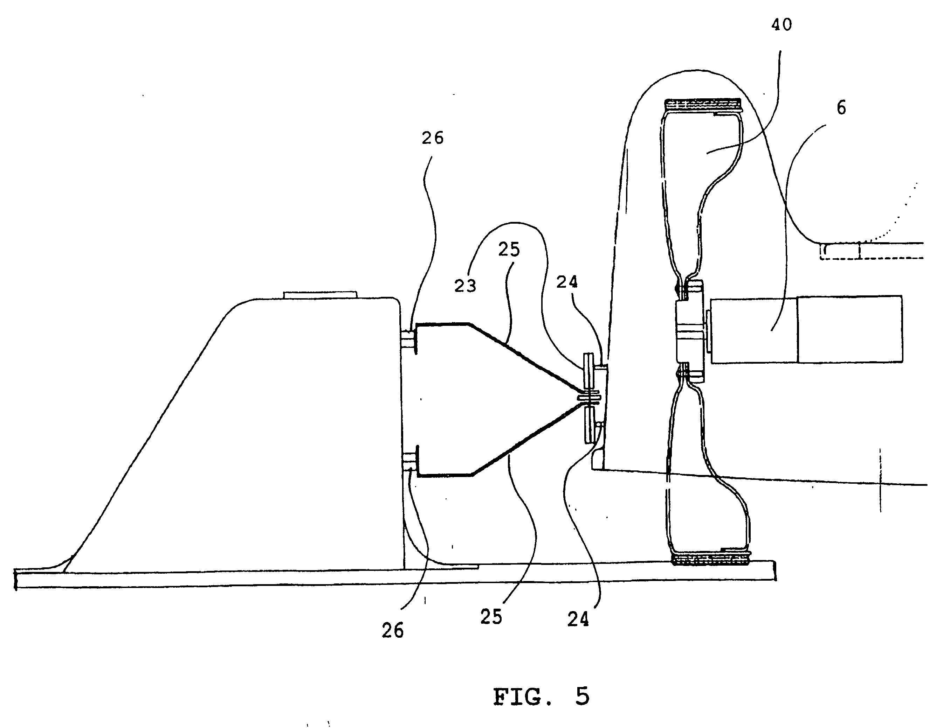

A la fig. 5 on illustre la machine connectée à la station de recharge. En suivant le fil périphérique, et à l'endroit de la station, deux balais latéraux 23 viennent en contact avec deux rails conducteurs 24 montés sur chaque flanc de la machine. Le fait de prévoir des rails sur les deux flancs permet à l'engin d'aborder la station dans les deux directions. Les balais 23 sont montés sur la station par l'intermédiaire du bras 25 fixé au boîtier de manière flexible en 26, permettant au bras de pivoter lorsque l'engin vient en contact. L'ordinateur de bord vérifie constamment la tension sur les balais 23. L'apparition d'une tension signale la présence des rails et donc de la station et permet à l'ordinateur d'arrêter l'engin.

Le système de décharge des balles peut être avantageusement couplé à un système de retour automatique des balles à proximité immédiate des joueurs. Ce système peut impliquer des conduits légèrement inclinés amenant les balles par gravité. Comme mentionné ci-dessus une station de recharge située sensiblement plus haut que la surface de tir, accessible vie des rampes, conviendra particulièrement dans ce but.

On peut cependant également prévoir un bac récepteur à hauteur du sol ou une cuvette dans le sol, le bac ou la cuvette étant muni d'un système d'élevation des balles, par exemple par vis sans fin, bande transporteuse ou moyens équivalents pour les amener dans des récipients ou des conduits de retour.

On comprendra aussi que le système décrit ci-avant peut être adapté pour la récolte d'autres objets que des balles de golf. En particulier, en modifiant le système, il pourrait s'agir de déchets ou de végétaux.

Ainsi le dispositif mécanique de préhension peut être constitué par un balai rotatif muni de picots, disposés radialement autour de l'axe dudit balai. Les picots sont aptes à percer des objets situés sur ladite surface, et lesdits objet sont entraînés dans le mouvement circulaire, détachés des picots par des éléments fixes s'engageant entre les picots et déviant les objets vers un dispositif de stockage. Il peut s'agir de feuilles mortes ou de morceaux de papier.

De même il est bien entendu que le système proposé par l'invention, peut être couplé à un système de tonte, éventuellement porté par le même châssis. Un engin automatique de tonte comme décrit dans les demandes PCT susmentionnées peut évoluer indépendamment, en utilisant cependant le même fil périphérique et la même station de recharge.

On comprendra également que le moteur du robot peut être associé à une source d'énergie autre qu'une batterie rechargeable, par exemple une pile à combustible, ou encore un moteur thermique ou hybride.

Selon une autre variante, le système selon la présente invention ne comporterait pas de moyen d'avancement propre mais serait tracté par un robot mobile de tonte auquel il serait éventuellement électroniquement relié.

## Revendications

1. Système de ramassage d'objets (2) sur une surface déterminée constitué par un engin mobile automatique muni d'au moins un moteur associé à une source d'énergie (5), un dispositif mécanique de préhension et de stockage des objets dans un réceptacle (9) supporté par l'engin mobile, un dispositif de vidage dudit réceptacle, un dispositif de limitation de la surface de ramassage (15), une station (17) de décharge des objets récoltés, et un ordinateur de bord (4) commandant l'avancement de l'engin, **caractérisé en ce que** l'engin automatique évolue sur la surface de ramassage, au moins par moments, de manière aléatoire.

2. Système selon la revendication 1 **caractérisé en ce que** la source d'énergie est une batterie rechargeable et **en ce qu'**il est prévu au moins une station de recharge (17) des batteries rechargeables.

3. Système selon la revendication 1 ou 2 dans lequel les objets sont des balles de golf (2).

4. Système selon la revendication précédente dans lequel la station de recharge (17) des batteries et de décharge des balles (2) est couplée.

5. Système selon n'importe laquelle des revendications précédentes dans lequel le dispositif de limitation de la surface est constitué par un fil (15) localisé au périmètre de cette surface et détectable par un détecteur (8) porté par l'engin.

6. Système selon la revendication précédente dans lequel l'engin rejoint la ou les stations en suivant le fil de limitation (15) de la surface, la ou les stations (17, 20) étant situées le long dudit fil ou une prolongation dudit fil.

7. Système selon la revendication précédente **caractérisé en ce que** la station de recharge (17) est constituée par au moins un balai fixe (23) situé le long dudit fil et apte à entrer en contact avec un des deux rails (24) latéraux portés par l'engin mobile.

8. Système selon n'importe laquelle des revendications précédentes **caractérisé en ce que** la ou les stations de recharge (17) se situent à proximité des joueurs.

9. Système selon n'importe laquelle des revendications 3 à 8 dans lequel la ou les stations comprennent une cuvette de récupération (18) des balles (2) munies d'un système d'élévation de celles-ci et reliée à la surface de tirs au moins par un conduit ,apte à ramener les balles à proximité immédiate des joueurs au moins partiellement par gravité.

10. Système selon la revendication 1 dans lequel le dispositif mécanique de préhension est constitué par un balai rotatif muni de picots, disposés radialement autour de l'axe dudit balai, les picots étant aptes à percer des objets situés sur ladite surface, lesdits objets entraînés dans le mouvement circulaire étant détachés desdits picots par des éléments fixes s'engageant entre lesdits picots et déviant les objets vers ledit dispositif de stockage.

11. Système selon la revendication précédente dans lequel les objets ramassés sont des feuilles mortes.

12. Système selon la revendication 10 dans lequel les objets ramassés sont des feuilles de papier.

13. Engin de ramassage automatique adapté au système selon n'importe laquelle des revendications précédentes.

14. Engin selon la revendication précédente **caractérisé en ce qu'**il comprend des bras déflecteurs aptes à faire dévier lors du mouvement d'avancement de l'engin les objets à récolter vers le dispositif de préhension.

15. Système selon les revendications 1 à 12 ou engin de ramassage selon la revendication 13 ou 14 **caractérisé en ce qu'**il comprend aussi un système de tonte automatique d'une surface d'herbe.

16. Méthode de ramassage d'objets sur une surface prédéterminée utilisant un système selon les revendications 1 à 12 ou 15 ou un engin selon les revendications 13 ou 14.

## Patentansprüche

1. Vorrichtung zum Einsammeln von Gegenständen (2) auf einer vorgegebenen Oberfläche, bestehend aus einem automatisch bewegbaren Gerät, das mit wenigstens einem Motor, der mit einer Energiequelle(5) verbunden ist, einer mechanischen Vorrichtung für das Ergreifen und die Aufbewahrung der Gegenstände in einem Auffangbehälter (9), der von dem beweglichen Gerät getragen wird, einer Entleerungsvorrichtung für den Auffangbehälter, einer Vorrichtung zur Begrenzung der abzusammelnden Oberfläche (15), einer Abladestation (17) für die eingesammelten Gegenstände und einem Bordcomputer (4) ausgestattet ist, der die Fortbewegung des Gerätes kontrolliert, **dadurch gekennzeichnet, daß** sich das automatische Gerät auf der abzusammelnden Oberfläche wenigstens zeitweise zufallsbedingt fortbewegt.

2. Vorrichtung gemäß Anspruch 1, **dadurch gekennzeichnet, daß** die Energiequelle aus einer wiederaufladbaren Batterie besteht und dadurch, daß wenigstens eine Ladestation (17) für die wiederaufladbare Batterie vorgesehen ist.

3. Vorrichtung gemäß Anspruch 1 oder 2, **dadurch gekennzeichnet, daß** die Gegenstände Golfbälle (2) sind.

4. Vorrichtung gemäß einem der vorhergehenden Ansprüche, **dadurch gekennzeichnet, daß** die Ladestation (17) für die Batterien und die Abladestation für die Bälle (2) zusammengefaßt sind.

5. Vorrichtung gemäß einem der vorhergehenden Ansprüche, **dadurch gekennzeichnet, daß** die Vorrichtung zur Begrenzung der Oberfläche aus einem Draht (15) besteht, der im Umkreis dieser Oberfläche angeordnet ist und der durch einen vom Gerät mitgeführten Detektor (8) detektierbar ist.

6. Vorrichtung gemäß einem der vorhergehenden Ansprüche, **dadurch gekennzeichnet, daß** das Gerät auf seinem Weg entlang des Drahtes (15) zur Begrenzung der Oberfläche die Station oder die Stationen aufsucht, wobei die Station oder die Stationen (17, 20) entlang des Drahtes (15) oder einer Verlängerung des genannten Drahtes angeordnet sind.

7. Vorrichtung gemäß einem der vorhergehenden Ansprüche, **dadurch gekennzeichnet, daß** die Ladestation (17) aus wenigstens einer festen Bürste (23) besteht, die entlang des Fadens angeordnet ist, und die geeignet ist, in Kontakt mit einer von zwei seitlich am beweglichen Gerät angeordneten Schienen (24) zu treten.

8. Vorrichtung gemäß einem der vorhergehenden Ansprüche, **dadurch gekennzeichnet, daß** sich die Ladestation oder die Ladestationen (17) in der Nähe der Spieler befinden.

9. Vorrichtung gemäß einem der Ansprüche 3 bis 8, **dadurch gekennzeichnet, daß** die Station oder die Stationen einen Behälter (18) zur Aufnahme der Bälle (2) umfassen, der mit einer Vorrichtung zur Anhebung derselben ausgestattet ist, und der mit der Spielfeldoberfläche durch wenigstens eine Leitung verbunden ist, die geeignet ist, die Bälle wenigstens zum Teil durch die Schwerkraft unterstützt in die unmittelbare Nähe der Spieler zurückzubefördern.

10. Vorrichtung gemäß Anspruch 1, **dadurch gekennzeichnet, daß** die mechanische Greifvorrichtung aus einer rotierenden Bürste besteht, die mit Nadeln ausgestattet ist, die radial an der Achse der Bürste angeordnet sind, wobei die Nadeln derart ausgebildet sind, daß sie die Gegenstände, die sich auf der besagten Oberfläche befinden, zu durchbohren vermögen, wobei die besagten Gegenstände, die durch die Kreisbewegung mitgenommen werden, von den Nadeln durch feststehende Elemente abgelöst werden, die mit den besagten Nadeln in Eingriff gelangen und die die Gegenstände in Richtung der besagten Aufbewahrungsvorrichtung umleiten.

11. Vorrichtung gemäß dem vorhergehenden Anspruch, **dadurch gekennzeichnet, daß** die aufgesammelten Gegenstände Laubblätter sind.

12. Vorrichtung gemäß Anspruch 10, **dadurch gekennzeichnet, daß** die aufgesammelten Gegenstände Papierfetzen sind.

13. Automatisches Aufsammelgerät, **dadurch gekennzeichnet, daß** es an die Vorrichtung gemäß einem der vorhergehenden Ansprüche angepaßt ist.

14. Gerät gemäß einem der vorhergehenden Ansprüche, **dadurch gekennzeichnet, daß** es schwenkbare Arme umfaßt, die geeignet sind, bei der Fortbewegung des Gerätes die aufzusammelnden Gegenstände in Richtung auf die Greifvorrichtung zu befördern.

15. Vorrichtung gemäß einem der Ansprüche 1 bis 12 oder Aufsammelgerät gemäß Anspruch 13 oder 14, **dadurch gekennzeichnet, daß** zusätzlich eine Vorrichtung zum automatischen Mähen einer Grasoberfläche vorgesehen ist.

16. Verfahren zum Einsammeln von Gegenständen auf einer vorgegebenen Oberfläche, **dadurch gekennzeichnet, daß** eine Vorrichtung gemäß einem der Ansprüche 1 bis 12 oder 15 oder ein Gerät gemäß Anspruch 13 oder 14 verwendet wird.

## Claims

1. A system for picking up objects (2) over a delimited surface, which consists of an automatic mobile machine provided at least one motor associated with a power source (5), a mechanical device for gripping and storing objects in a container (9) supported by the mobile machine, a device for emptying said container, a device for limiting the pick up surface (15) and a station in which the picked up objects may be unloaded (17) and an on-board computer controlling the advancement of the machine **characterized in that** the automatic machine proceeds over the pick up surface, at least partly, in a random manner.

2. A system as claimed in claim 1, **characterized in that** the power source is a rechargeable battery and that there is provided at least one station (17) for recharging rechargeable batteries.

3. A system as claimed in claim 1 or 2, wherein the objects are golf balls (2).

4. A system as claimed in any preceding claim, wherein the battery recharging (17) and the ball unloading stations are coupled (2).

5. A system as claimed in any preceding claim, wherein the surface limiting device consists of a wire (15) extending at the periphery of said surface and being detectable by a detector (8) carried by the machine.

6. A system as claimed in the preceding claim, wherein the machine reaches the station/s by following the surface limiting wire (15), the station/s (17, 20) being situated along said wire or on an extension thereof.

7. A system as claimed in the preceding claim, **characterized in that** the recharging station (17) consists of at least one fixed brush (23) which is situated along said wire and is adapted to come in contact with one of two side rails (24) carried by the mobile machine.

8. A system as claimed in any preceding claim, **characterized in that** the recharging stations (17) are situated in the proximity of players.

9. A system as claimed in any preceding claim, wherein the station/s comprise a ball (2) recovery bowl (18), equipped with a ball lifting system, and connected to the driving site by means of a duct which is adapted to convey balls in the immediate proximity of the players at least partly by gravity.

10. A system as claimed in claim 1, wherein the mechanical gripping system consists of a rotary brush having spikes, arranged radially around the shaft of said brush, said spikes being adapted to pierce the objects situated on said surface, and said objects being dragged along into a circular movement, released from the spikes by fixed elements which are engaged between the spikes, and deviate the objects toward a storage device.

11. A system as claimed in the preceding claim, wherein the picked up objects are dead leaves.

12. A system as claimed in claim 9, wherein the picked up objects are paper sheets.

13. An automatic pick up machine adapted to the system as claimed in any preceding claim.

14. A machine as claimed in the preceding claim, **characterized in that** it includes deflector arms which are adapted to deviate the objects to be picked up toward the gripping device, as the machine proceeds.

15. A system as claimed in claims 1 through 12 or a pick up machine as claimed in claims 13 or 15, **characterized in that** it also includes an automatic system for mowing a grass surface.

16. A method of picking up objects over a predetermined surface, by using a system according to claims 1 through 12, or 15, or a machine as claimed in claim 13 or 14.
